# EUROPÄISCHE PATENTSCHRIFT

(11) **EP 1 502 046 B1**
(45) Veröffentlichungstag und Bekanntmachung des Hinweises auf die Patenterteilung: **25.10.2006**
(21) Anmeldenummer: 03727347.1
(22) Anmeldetag: 24.04.2003
(51) Int. Cl.: F16K 31/00

(54) **PIEZOELEKTRISCH BETÄTIGBARES VENTIL**
PIEZOELECTRICALLY ACTUATED VALVE
SOUPAPE A ACTIONNEMENT PIEZO-ELECTRIQUE

(30) Priorität: 26.04.2002 EP 02009595
(43) Veröffentlichungstag der Anmeldung: 02.02.2005
(73) Patentinhaber: FESTO AG & Co, 73734 Esslingen (DE)
(72) Erfinder: HOFMANN, Herbert, deceased (DE); RIEDEL, Michael, 96472 Rödental (DE); SCHMID, Andreas, 96247 Michelau (DE); TÖPFER, Udo, 96247 Michelau (DE)
(74) Vertreter: Tergau & Pohl Patentanwälte
(86) Internationale Anmeldenummer: PCT/EP2003/004252
(87) Internationale Veröffentlichungsnummer: WO 2003/091613

(56) Entgegenhaltungen:
- EP-A- 0 145 859
- US-A- 5 628 411
- US-A- 6 142 444
- MARINESCU D: "LOW DEAD VOLUME PIEZOELECTRIC VALVE" REVIEW OF SCIENTIFIC INSTRUMENTS, AMERICAN INSTITUTE OF PHYSICS. NEW YORK, US, Bd. 61, Nr. 6, 1. Juni 1990 (1990-06-01), Seiten 1749-1750, XP000166162 ISSN: 0034-6748

## Beschreibung

Die Erfindung betrifft ein piezoelektrisch betätigbares Ventil nach dem Oberbegriff des Patentanspruchs 1.

Ein derartiges Ventil ist aus der US 5,628,411 zu entnehmen. Piezoelektrisch betätigbare Ventile werden beispielsweise als Hydraulik- oder Pneumatikventile verwendet. Ein Ventil mit einer als Biegewandler ausgebildeten Piezokristall-Anordnung ist beispielsweise aus der DE 36 08 550 A1 bekannt. Der Biegewandler ist hierbei einseitig in einem Gehäuse eingespannt und trägt an dessen nicht eingespanntem Ende einen Dichtkörper, der zur Abdichtung eines die Wandung des Gehäuses durchdringenden Kanals vorgesehen ist. Durch die einseitige Einspannung des Biegewandlers soll ein ausreichender Betätigungshub ermöglicht werden, jedoch ist mit dieser Anordnung nur eine geringe Betätigungskraft erreichbar.

Aus der US 5,630,440 ist ein piezoelekrisch betätigbares Ventil bekannt, das einen mehrseitig in einem Gehäuse eingespannten Biegewandler aufweist. Durch den Biegewandler ist in dessen Mitte ein Ventilsitz verschließbar, der am Ende eines senkrecht zum Biegewandler verlaufenden Kanals angeordnet ist. Mit Hilfe der mehrseitigen Einspannung sollen vergleichsweise hohe Betätigungskräfte erreichbar sein. Um zumindest in geringem Umfang eine Längenänderung des Biegewandlers bei dessen Biegebewegung zu ermöglichen, sind im Bereich der eingespannten Enden des Biegewandlers abknickende Füße vorgesehen. Eine mit der Biegung des Biegewandlers verbundene Dehnung ist jedoch mit einem Kraftaufwand verbunden, der nicht für die gewünschte Hubbewegung des als Verschlusselement dienenden Biegewandlers zur Verfügung steht. Gleichzeitig bleibt die Hubbewegung auf ein vergleichsweise geringes Maß beschränkt. Zudem ist der Biegewandler mit abknickenden Füßen fertigungstechnisch aufwändig gestaltet.

Der Erfindung liegt die Aufgabe zugrunde, ein piezoelektrisch betätigbares Ventil mit einem Biegewandler anzugeben, das bei einfacher konstruktiver Gestaltung sowohl eine hohe Betätigungskraft als auch einen ausreichend hohen Betätigungshub bereitstellt.

Diese Aufgabe wird erfindungsgemäß gelöst durch ein piezoelektrisch betätigbares Ventil mit den Merkmalen des Anspruchs 1. Hierbei weist ein Ventil einen in einem Gehäuse angeordneten Biegewandler auf, der eine Offen-Position einnehmen kann, in der ein Fluidkanal freigegeben ist und eine Geschlossen-Position einnehmen kann, in der der Fluidkanal verschlossen ist. Der Biegewandler weist einen Rand auf, wobei zumindest ein Teilbereich des Randes im Gehäuse gelagert ist. Insbesondere im Fall eines rechteckigen Biegewandlers werden einzelne äußere Teilbereiche des Biegewandlers auch jeweils als Ränder oder Enden bezeichnet. Die Enden des Biegewandlers sind derart im Gehäuse gelagert, dass diese beweglich geführt sind. Die Führung der Enden des Biegewandlers ermöglicht hierbei bevorzugt ausschließlich eine Bewegung oder einen Ausgleich thermisch bedingter Längenänderungen in der Ebene des Biegewandlers. Der Biegewandler ist somit an dessen gelagerten Enden oder Randteilbereichen in Richtung der Flächennormale des Biegewandlers zumindest annähernd spielfrei geführt. Die Hebelverhältnisse am piezoelektrisch betätigbaren Biegewandler entsprechen damit, soweit dieser durch eine angelegte elektrische Spannung noch nicht wesentlich verformt ist, im Wesentlichen den Hebelverhältnissen bei einem mehrseitig eingespannten Biegewandler. Dementsprechend sind mindestens die bei einem mehrseitig eingespannten Biegewandler erreichbaren hohen Betätigungskräfte im Bereich der Ausgangsstellung des Biegewandlers, d.h. der Stellung des Biegewandlers, die dieser ohne angelegte Spannung einnimmt, problemlos erreichbar.

Mit zunehmender Biegung bei steigender angelegter elektrischer Spannung wird bei einem mehrseitig eingespannten Biegewandler ein zunehmender Anteil der zur Verfügung stehenden Kraft zur Überwindung der durch die Einspannung erzeugten Kräfte aufgewandt und steht damit nicht mehr zum eigentlichen Zweck, d.h. insbesondere dem flüssigkeits- bzw. gasdichten Verschluss eines Fluidkanals, zur Verfügung. Im Gegensatz hierzu ist bei dem erfindungsgemäßen Ventil mit flexibel geführtem Biegewandler in jedem Betriebszustand die gesamte durch den Biegewandler erzeugte Kraft nutzbar. Hierdurch ist der nutzbare Betätigungshub größer als im Fall eines mehrfach eingespannten Biegewandlers. Ein einseitig eingespannter Biegewandler hätte dagegen den Nachteil, dass sich das auf dem Biegewandler befestigte Dichtelement bzw. der die Ventilsitzabdichtung direkt bewirkende Bereich des Biegewandlers mit dessen zunehmendem Hub nicht nur in gewünschter Weise axial, sondern zusätzlich auch radial vom Ventilsitz entfernt. Es wäre daher schwieriger, mit einem derartigen Ventil mit einseitig eingespanntem Biegewandler eine zuverlässige Dichtwirkung zu erreichen. Das erfindungsgemäß mehrseitig geführte Ventil ist dagegen insbesondere auch besser geeignet, eine proportionale Durchflusssteuerung, d.h. einen definierten Zusammenhang zwischen Stellung des Biegewandlers und Durchfluss, zu realisieren.

Die bewegliche Führung des Biegewandlers im Gehäuse bewirkt eine Kompensation thermisch bedingter Ausdehnungen des Biegewandlers und/oder des Gehäuses. Insbesondere entstehen bei einer Erhitzung der Biegewandlers keine unerwünschten thermisch bedingten Spannungen, die das Schließ- und Regelverhalten negativ beeinflussen.

Um ein nicht beabsichtigtes Verschieben des Biegewandlers in der Ebene, in welcher dieser im Gehäuse liegt, zu verhindern, ist nach einer bevorzugten Ausgestaltung ein den Biegewandler führendes Führungselement, bevorzugt im Bereich der Achse des Fluidkanals, vorgesehen. Die Achse des Fluidkanals schneidet den Biegewandler vorzugsweise zumindest annähernd in dessen Mitte. Der Biegewandler ist in diesem Bereich durch das Führungselement vorzugsweise ausschließlich in Axialrichtung des zumindest annähernd senkrecht auf dem Biegewandler stehenden Fluidkanals beweglich. Weder durch eine thermisch bedingte Ausdehnung, noch durch die Biegung des Biegewandlers bei zunehmendem Hub tritt somit ein radialer Versatz eines auf dem Biegewandler angeordneten Verschlusselementes bzw. des den Verschluss des Fluidkanals bewirkenden zentralen Bereichs des Biegewandlers auf. Das Führungselement greift vorzugsweise in den Fluidkanal ein, der somit als Führungsbuchse dient.

Nach einer bevorzugten Ausgestaltung weist der Biegewandler eine Membran als Träger einer piezoelektrisch aktiven Aktorschicht auf, wobei die thermischen Ausdehnungskoeffizienten der Membran sowie der Aktorschicht zumindest annähernd übereinstimmen. Hierdurch ist sichergestellt, dass sich durch Temperaturschwankungen die Position des Biegewandlers in Axialrichtung des Fluidkanals nicht verändert, und dass die in dieser Richtung wirkenden Kräfte zumindest annähernd gleich bleiben.

Nach einer weiteren bevorzugten Ausgestaltung ist der Biegewandler, soweit an diesen keine elektrische Spannung angelegt ist, mechanisch nicht vorgespannt. Der Biegewandler befindet sich dabei im elektrisch und mechanisch spannungslosen Zustand vorzugsweise in Offen-Position. Dabei ist es besonders vorteilhaft, wenn zugleich, wie vorstehend beschrieben, die Ausdehnungskoeffizienten von Membran und Aktorschicht übereinstimmen. Hierdurch steht zum einen die durch die Aktorschicht erzeugte Kraft vollständig zur Verformung des Biegewandlers zur Verfügung, zum anderen ist der Grad der Öffnung des Fluidkanals insbesondere auch in vollständiger Offen-Position des Biegewandlers temperaturunabhängig. Bevorzugt ist der Biegewandler in Offen-Position, d.h. in mechanisch und elektrisch spannungslosem Zustand, vollständig eben.

Nach einer bevorzugten Weiterbildung weist der Biegewandler im Bereich dessen Enden, die im Gehäuse geführt sind, keine Aktorschicht auf. Bei einer Betätigung des Biegewandlers durch Anlegen einer elektrischen Gleichspannung ändert sich die Dicke der Aktorschicht. Würde die Aktorschicht die gesamte Fläche der Membran des Biegewandlers abdecken, so müssten die Gehäuseaufnahmen des Biegewandlers zumindest in geringem Umfang Dickenänderungen der Aktorschicht aufnehmen. Eine einfach gestaltete spielfreie Führung wäre somit nicht möglich. Durch einen Verzicht auf eine Aktorschicht an den Enden des Biegewandlers, d.h. im Bereich der Gehäuseaufnahmen, ist dagegen eine senkrecht zur Ebene, in der Biegewandler angeordnet ist, spielfreie und zugleich quer zu dieser Richtung flexible Führung des Biegewandlers im Gehäuse auf einfache Weise ermöglicht.

Das piezoelektrisch betätigbare Ventil ist mit einem Fluid, beispielsweise Hydraulikflüssigkeit oder Druckluft, schwankenden Drucks betreibbar. Beim Betrieb des Ventils wird dessen Gehäuse durch den Druck des Fluids zumindest in einem sehr geringen Maß verformt. Diese Verformung sollte keinen Einfluss auf die Betriebseigenschaften des Ventils haben. Um dies zu erreichen, ist das Ventil nach einer bevorzugten Weiterbildung derart ausgestaltet, dass im Gehäuse beidseitig der Membran jederzeit der gleiche Druck herrscht. Hierzu weist das Gehäuse auf dessen dem Fluidkanal gegenüberliegender Seite mindestens eine Öffnung auf, die mit einer weiteren Öffnung auf der Seite des Fluidkanals korrespondiert. Alternativ hierzu kann auch der Biegewandler, insbesondere in dessen nicht mit einer piezoelektrischen Aktorschicht beschichtetem Bereich, eine dem Druckausgleich dienende Öffnung aufweisen. Ebenso können die Gehäuseführungen derart gestaltet sein, dass diese einen Druckausgleich zulassen. Durch den Druckausgleich wird insbesondere auch verhindert, dass sich der Biegewandler durch unterschiedliche an dessen Oberflächen herrschende Drücke unbeabsichtigt verformt.

Bei einer Betätigung des Biegewandlers sollten Winkeländerungen dessen Oberfläche in Relation zum Gehäuse außerhalb des Bereichs, der zum Verschluss des Fluidkanals dient, nicht behindert werden. Dies gilt insbesondere für die im Gehäuse gelagerten Teilbereiche des Randes des Biegewandlers. Vorzugsweise sind daher die zur Führung des Biegewandlers vorgesehenen Kontaktflächen gekrümmt. Die Krümmung kann hierbei mit einem derart geringen Krümmungsradius ausgebildet sein, dass die Kontaktfläche zu einer Kante entartet ist. Außerhalb der einzelnen Kontaktflächen, d.h. in Richtung von der Mitte des Biegewandlers weg, sind vorzugsweise jeweils sogenannte Ausdehnungsräume vorgesehen, in denen sich der Biegewandler sowohl innerhalb der Ebene, in der dieser liegt, ausdehnen kann, als auch eine Bewegung des Randes des Biegewandlers senkrecht zu dieser Ebene ermöglicht ist.

Der Vorteil der Erfindung liegt insbesondere darin, dass aufgrund der flexiblen mehrseitigen Führung des Randes des Biegewandlers thermisch bedingte Längenänderungen aufgefangen werden, d.h. eine thermische Kompensation erreicht ist. Der Biegewandler kann dabei eine runde, insbesondere kreisrunde, oder eckige, insbesondere rechteckige, Form aufweisen.

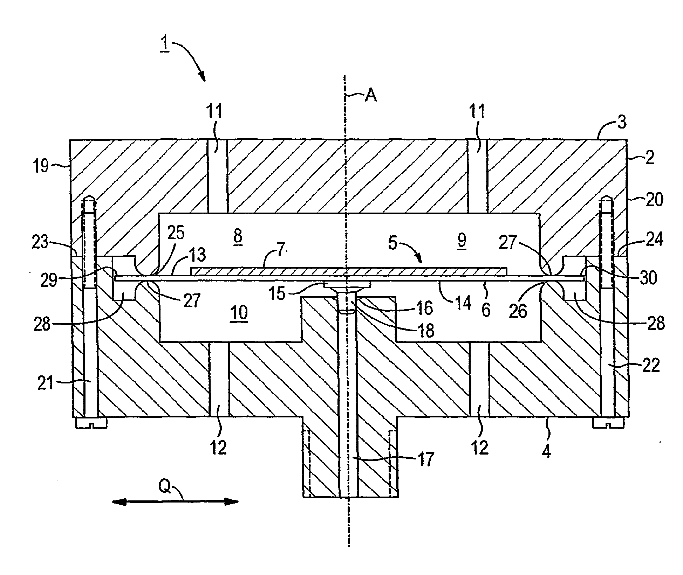

Nachfolgend wird ein Ausführungsbeispiel der Erfindung anhand einer Zeichnung näher erläutert. Darin zeigt die einzige Figur im Querschnitt in vereinfachter Darstellung ein piezoelektrisch betätigbares Ventil 1 in einer Ausbildung als Normal-Offen-Ventil (NO-Ventil).

Das Ventil 1 umfasst ein Gehäuse 2 mit einem oberen Gehäuseteil 3 und einem unteren Gehäuseteil 4 sowie einen zwischen den Gehäuseteilen 3,4 angeordneten piezoelektrisch betätigbaren Biegewandler 5. Der Biegewandler 5 ist in der dargestellten Offen-Position des Ventils 1 eben und weist eine Membran 6, eine mit dieser verklebte Aktorschicht 7 aus piezoelektrisch aktivem Material sowie nicht näher dargestellte Elektroden zum Anschluss an ebenfalls nicht dargestellte Zuleitungen auf. Der elektrische Anschluss der Aktorschicht 7 kann beispielsweise mit Hilfe einer Zwischenschicht mit aufgebrachten Leiterbahnen zwischen der Aktorschicht 7 und der Membran 6 realisiert sein. Die Aktorschicht 7 kann als einzelne oder mehrlagige Piezokeramikschicht (sogenannte Single- bzw. Multilayer-Piezokeramik) aufgebaut sein. Die thermischen Ausdehnungskoeffizienten der Aktorschicht 7 sowie der aus einer Legierung hergestellten Membran 6 sind annähernd identisch. Der Biegewandler 5 teilt den Gehäuseinnenraum 8 in einen oberen Gehäuseinnenraum 9 und einen unteren Gehäuseinnenraum 10 auf.

Das Ventil 1 dient als Schalt- und Proportionalventil im hydraulischen Bremssystem eines Fahrzeugs und ist mit einer Hydraulikflüssigkeit als Fluid gefüllt. Das Gehäuse 2 weist in dessen oberem Gehäuseteil 3 zwei obere Gehäuseöffnungen oder Einströmöffnungen 11 für das Fluid und in dessen unterem Gehäuseteil 4 zwei weitere untere Gehäuseöffnungen oder Einströmöffnungen 12 auf. Sämtliche Einströmöffnungen 11,12 korrespondieren miteinander, so dass im gesamten Gehäuseinnenraum 8 stets der gleiche Druck herrscht. Eine unbeabsichtigte Verbiegung des Biegewandlers 5 unter Last, aufgrund von Druckunterschieden zwischen dem Fluid im oberen Gehäuseinnenraum 9 und im unteren Gehäuseinnenraum 10, ist somit ausgeschlossen. Die Aktorschicht 7 des Biegewandlers 5 ist ausschließlich auf dessen Membranoberseite 13 angeordnet, während mittig auf der Membranunterseite 14 mit dieser ein Dichtelement 15 durch eine Verklebung fest verbunden ist. Das Dichtelement 15 liegt einem Ventilsitz 16 gegenüber, der am Ende eines das untere Gehäuseteil 4 durchdringenden und in den unteren Gehäuseinnenraum 10 hinein geführten Fluidkanals 17 angeordnet ist.

Zentral im Fluidkanal 17 verläuft eine Achse A, die zugleich Symmetrieachse des Ventils 1 ist und senkrecht auf dem Biegewandler 5 steht. An das Dichtelement 15 schließt sich in Richtung des Fluidkanals 17 ein Führungselement 18 an, welches teilweise in diesen eindringt, so dass der Fluidkanal 17 im Bereich des Ventilsitzes 16 als Führungsbuchse für das Führungselement 18 dient. Das Führungselement 18 ist gleitgelagert. Der Biegewandler 5 ist in diesem Bereich somit ausschließlich axial, d.h. in Richtung der Achse A, jedoch nicht radial, d.h. in Richtung zum linken Gehäuserand 19 oder zum rechten Gehäuserand 20 beweglich. Das Führungselement 18 ist derart durchbrochen gestaltet, dass das Fluid praktisch ungehindert aus dem Gehäuseinnenraum 8 durch den Fluidkanal 17 aus dem Ventil 1 ausströmen kann. Durch das Anlegen einer elektrischen Gleichspannung an die Elektroden des Biegewandlers 5 wird dieser in Richtung zum unteren Gehäuseteil 4 hin in eine nicht dargestellte Geschlossen-Position gebogen, wobei das Dichtelement 15 den Fluidkanal 17 am Ventilsitz 16 verschließt.

Das obere Gehäuseteil 3 ist mit dem unteren Gehäuseteil 4 im Bereich des linken Gehäuserandes 19 und im Bereich des rechten Gehäuserandes 20 durch eine linke Verschraubung 21 bzw. eine rechte Verschraubung 22 verbunden. Durch die Verschraubungen 21,22 sind die Gehäuseteile 3,4 an einer linken Kontaktfläche 23 und an einer rechten Kontaktfläche 24 aneinander gepresst. Der Biegewandler 5 ist in der Nähe der linken Kontaktfläche 23 in einer linken Führung 25 sowie in der Nähe der rechten Kontaktfläche 24 in einer rechten Führung 26 derart flexibel geführt, dass eine Bewegung der Membran 6, welche an diesen Stellen frei von einer Aktorschicht ist, in Querrichtung Q, senkrecht zur Achse A, ermöglicht ist. Die Gehäuseteile 3,4 üben im Bereich der Führungen 25,26 keine oder lediglich eine sehr geringe Kraft auf die Membran 6 aus. Die Membran 6 ist somit mechanisch vom Gehäuse 2 entkoppelt.

Die Führungen 25,26 sind des Weiteren mit abgerundeten Kontaktflächen 27 derart gestaltet, dass eine geringfügige Schrägstellung der Membran 6 bei einer Biegung des Biegewandlers 5 ungehindert möglich ist. Der Bewegung des Biegewandlers 5 sind somit im Ventil 1 keine mechanischen Widerstände entgegengesetzt. Eine ungewollte Übertragung von Kraft vom Gehäuse 2 auf die Membran 6 ist ausgeschlossen. Zugleich ist das in der Mitte des Biegewandlers 5 angeordnete Dichtelement 15 in jedem Betriebszustand durch das Führungselement 18 zentriert. Zum Ausgleich mechanisch oder thermisch bedingter Abmessungsänderungen sind Ausdehnungsräume 28 im Bereich der Führungen 25,26 vorgesehen. Der linke Membranrand 29 sowie der rechte Membranrand 30 des Biegewandlers 5 sind von der Wandung des Gehäuses 2 auch bei maximaler Betriebstemperatur des Ventils 1 zumindest geringfügig beabstandet. Zudem ermöglichen die Ausdehnungsräume 28 auch eine zumindest geringfügige Bewegung der Membranränder 29,30 in Richtung der Achse A. Während die Teilbereiche 29,30 des Randes des Biegewandlers 5 durch die Führungen 25,26 im Gehäuse 2 gelagert sind, sind die beiden weiteren Seiten des Umfangs des rechteckigen Biegewandlers 5 im Gehäuse 2 frei beweglich. Im Fall einer runden Membran 6 fallen die in den Führungen 25,26 flexibel gelagerten Teilbereiche 29,30 des Randes des Biegewandlers 5 zu einem einzigen, nicht notwendigerweise an dessen gesamten Umfang im Gehäuse 2 geführten, Rand zusammen.

Der obere Gehäuseinnenraum 9 ist durch die Membran 6 an den Führungen 25,26 vom unteren Gehäuseinnenraum 10 nicht notwendigerweise flüssigkeitsdicht getrennt. Die Membran 6 ist in der dargestellten Offen-Position des Biegewandlers 5 ohne mechanische Vorspannung im Gehäuse 2 geführt, so dass bereits durch eine geringe angelegte Spannung die Position des Dichtelementes 15 veränderbar ist. Es ist keine mechanische Vorspannung zu überwinden. Der maximale Stellweg des Biegewandlers 5 übersteigt daher den maximalen Stellweg eines Ventils mit vorgespannter Membran. Entsprechendes gilt für die maximale Stellkraft. Das Ventil 1 ist damit sehr energiesparend zu betreibbar und sowohl als Proportional- als auch als Schaltventil gut geeignet. Aufgrund der thermischen Kompensation des Ventils 1 ist dieses in einem weiten Temperaturbereich betreibbar. Die nutzbaren Stellkräfte des Biegewandlers 5 sind durch die zumindest weitgehende Vermeidung thermisch bedingter Verspannungen von der Betriebstemperatur zumindest annähernd unabhängig.

## Patentansprüche

1. Piezoelektrisch betätigbares Ventil (1) mit einem Gehäuse (2) und mit einem darin angeordneten und einen Rand aufweisenden Biegewandler (5), welcher eine einen Fluidkanal (17) freigebende Offen-Position und eine diesen verschließende Geschlossen-Position einnehmen kann und der zumindest mit einem Teilbereich (29,30) seines Randes im Gehäuse (2) gelagert ist, **dadurch gekennzeichnet, dass** der Teilbereich (29,30) zwischen einem oberen Gehäuseteil und einem unteren Gehäuseteil in Richtung der Flächennormalen des Biegewandlers (5) zumindest annähernd spielfrei im Gehäuse (2) eingespannt ist derart, dass der Biegewandler im Gehäuse (2) in der Ebene des Biegewandlers (5) beweglich geführt ist.

2. Piezoelektrisch betätigbares Ventil (1) nach Anspruch 1, **gekennzeichnet durch** ein Führungselement (18) zur Führung des Biegewandlers (5).

3. Piezoelektrisch betätigbares Ventil (1) nach Anspruch 2, **dadurch gekennzeichnet , dass** das Führungselement (18) im Bereich der Achse (A) des Fluidkanals (17) angeordnet ist.

4. Piezoelektrisch betätigbares Ventil (1) nach einem der Ansprüche 1 bis 3, **dadurch gekennzeichnet , dass** der Biegewandler (5) eine Membran (6) sowie eine Aktorschicht (7) aufweist, deren thermische Ausdehnungskoeffizienten zumindest annähernd übereinstimmen.

5. Piezoelektrisch betätigbares Ventil (1) nach einem der Ansprüche 1 bis 4, **dadurch gekennzeichnet , dass** der Biegewandler (5) im elektrisch spannungslosen Zustand mechanisch nicht vorgespannt ist.

6. Piezoelektrisch betätigbares Ventil (1) nach einem der Ansprüche 1 bis 5, **dadurch gekennzeichnet , dass** der Biegewandler (5) an dessen im Gehäuse (2) geführten Teilbereich (29,30) dessen Randes keine Aktorschicht (7) aufweist.

7. Piezoelektrisch betätigbares Ventil (1) nach einem der Ansprüche 1 bis 6, **gekennzeichnet durch** je eine Gehäuseöffnung (11,12) zum Druckausgleich im Gehäuse (2) beidseitig der Membran (6).

8. Piezoelektrisch betätigbares Ventil (1) nach einem der Ansprüche 1 bis 7, **gekennzeichnet durch** eine gekrümmte Kontaktfläche (27) im Gehäuse (2) zur Führung des Teilbereichs (29,30) des Randes des Biegewandlers (5).

9. Piezoelektrisch betätigbares Ventil (1) nach einem der Ansprüche 1 bis 8, **gekennzeichnet durch** einen Ausdehnungsraum (28) im Gehäuse (2) im Bereich des Teilbereichs (29,30) des Randes des Biegewandlers (5).

## Claims

1. A piezoelectrically actuated valve (1) with a housing (2) and with disposed therein a bending actuator (5), which is equipped with an edge and which can assume an open position, releasing a fluid channel (17), or a closed position, sealing the fluid channel (17), at least a partial region (29, 30) of its edge being mounted in the housing (2), **characterised in that** the partial region (29, 30) is clamped by the housing, at least virtually tautly, between an upper part of the housing and a lower part of the housing in the direction of the planar normals of the bending actuator (5), in a manner such that the bending actuator is configured in the housing (2) to be movable in the plane of the bending actuator (5).

2. A piezoelectrically actuated valve (1) according to claim 1, **characterised by** a guidance element (18) for guidance of the bending actuator (5).

3. A piezoelectrically actuated valve (1) according to claim 2, **characterised in that** the guidance element (18) is disposed in the region of the axis (A) of the fluid channel (17).

4. A piezoelectrically actuated valve (1) according to any one of claims 1 to 3, **characterised in that** the bending actuator (5) is equipped with a diaphragm (6) and an actuator layer (7), the thermal expansion coefficients of which correspond at least virtually.

5. A piezoelectrically actuated valve (1) according to any one of claims 1 to 4, **characterised in that** the bending actuator (5) is not mechanically prestressed in the de-energised state.

6. A piezoelectrically actuated valve (1) according to any one of claims 1 to 5, **characterised in that**, at the partial region (29, 30) of its edge configured in the housing (2), the bending actuator (5) is not equipped with any actuator layer (7).

7. A piezoelectrically actuated valve (1) according to any one of claims 1 to 6, **characterised by** a housing port (11, 12) on either side of the diaphragm (6) for pressure equalisation in the housing (2).

8. A piezoelectrically actuated valve (1) according to any one of claims 1 to 7, **characterised by** a curved contact surface (27) in the housing (2) for guidance of the partial region (29, 30) of the edge of the bending actuator (5).

9. A piezoelectrically actuated valve (1) according to any one of claims 1 to 8, **characterised by** an expansion chamber (28) in the housing (2) in the region of the partial region (29, 30) of the edge of the bending actuator (5).

## Revendications

1. Soupape (1) à actionnement piézoélectrique comprenant un corps (2) et un transducteur (5) de flexion qui y est disposé et qui a un bord, le transducteur pouvant prendre une position ouverte dégageant un canal (17) pour du fluide et une position fermée le fermant et étant monté dans le corps (2) au moins par une sous partie (29, 30) de son bord, **caractérisée en ce que** la sous partie (29, 30) est bloquée au moins en direction de la normale à la surface du transducteur (5) de flexion au moins à peu près sans jeu dans le corps (2) entre une partie supérieure du corps et une partie inférieure du corps, de façon à ce que le transducteur de flexion soit guidé de manière mobile dans le corps (2) dans le plan du transducteur (5) de flexion.

2. Soupape (1) à actionnement piézoélectrique suivant la revendication 1, **caractérisée par** un élément (18) de guidage du transducteur (5) de flexion.

3. Soupape (1) à actionnement piézoélectrique suivant la revendication 2, **caractérisée en ce que** l'élément (18) de guidage est disposé dans la zone de l'axe (A) du canal (17) pour du fluide.

4. Soupape (1) à actionnement piézoélectrique suivant l'une des revendications 1 à 3, **caractérisée en ce que** le transducteur (5) de flexion a une membrane (6) ainsi qu'une couche (7) d'actionneur, dont les coefficients de dilatation thermique coïncident au moins à peu près.

5. Soupape (1) à actionnement piézoélectrique suivant l'une des revendications 1 à 4, **caractérisée en ce** le transducteur (5) de flexion n'est, à l'état sans tension électrique, pas mis sous pré contrainte mécaniquement.

6. Soupape (1) à actionnement piézoélectrique suivant l'une des revendications 1 à 5, **caractérisée en ce que** le transducteur (5) de flexion n'a pas de couche (7) d'actionneur dans la sous partie (29, 30), guidée dans le corps (2), de son bord.

7. Soupape (1) à actionnement piézoélectrique suivant l'une des revendications 1 à 6, **caractérisée par** une ouverture (11, 12) dans le corps pour compenser la pression dans le corps (2) des deux côtés de la membrane (6).

8. Soupape (1) à actionnement piézoélectrique suivant l'une des revendications 1 à 7, **caractérisée par** une surface (27) de contact courbée dans le corps (2) pour guider la sous partie (29, 30) du bord du transducteur (5) de flexion.

9. Soupape (1) à actionnement piézoélectrique suivant l'une des revendications 1 à 8, **caractérisée par** un espace (28) de dilatation dans le corps (2) dans la zone de la sous partie (29,30) du bord du transducteur (5) de flexion.
